# EUROPEAN PATENT APPLICATION

(11) **EP 4 693 618 A1**
(43) Date of publication of application: **11.02.2026**
(21) Application number: 24882915.2
(22) Date of filing: 25.10.2024
(51) Int. Cl.: H01M 10/6557, H01M 10/613, H01M 10/6567, H01M 50/204, H01M 50/367

(54) **BATTERY CELL STACK ASSEMBLY AND BATTERY PACK COMPRISING SAME**

(30) Priority: 27.10.2023 KR 20230145768; 22.02.2024 KR 20240025999; 24.10.2024 KR 20240146951
(71) Applicant: LG Energy Solution, Ltd., Seoul 07335 (KR)
(72) Inventor: KIM, Yoonkyung, Daejeon 34122 (KR); WOO, Sun Hwak, Daejeon 34122 (KR); PARK, Doyun, Daejeon 34122 (KR)
(74) Representative: Plasseraud IP
(86) International application number: PCT/KR2024/016464
(87) International publication number: WO 2025/089889

(57) **Abstract**

Provided are a battery cell stack assembly and a battery pack comprising same. The battery cell stack assembly according to one aspect of the present specification comprises: cell stacks in which a plurality of battery cells are vertically stacked so that the leads are disposed on at least one of the sides, one side or the other side, in a horizontal first direction; and a cooling plate disposed between the plurality of battery cells, wherein the cell stacks, multiply provided, are arrayed in a horizontal second direction intersecting the horizontal first direction, and the cooling plate extends in the horizontal second direction so as to pass over the plurality of cell stacks arranged in the horizontal second direction.

## Description

### Technical Field

The present disclosure relates to a battery cell stack assembly and a battery pack including the same. More specifically, the present disclosure relates to a battery cell stack assembly for effectively performing a surficial cooling scheme and a battery pack including the same.

### Background Art

A lithium secondary battery is a battery that produces and stores electric energy by intercalation and deintercalation of a lithium ion in a positive electrode and a negative electrode. Since having an excellent storage capacity and excellent quality of voltage and a life, the lithium secondary battery is used as a battery of a laptop computer and a smartphone as well as an electric vehicle.

Generally, the lithium secondary battery is mostly formed in a shape in which multiple battery cells are electrically connected to each other in series and/or parallel. Particularly, the multiple battery cells form a battery cell stack (e.g., a battery module) in a state of being stood, and only one single battery cell stack is used, or two or more battery cell stacks are electrically connected to each other in series and/or parallel, so that a high-level device such as a battery pack may be formed.

However, when concentrated in a narrow space, the multiple battery cells may be vulnerable to fire. For example, as thermal propagation occurs in one battery cell, a high-temperature gas may discharged, and such thermal propagation may spread to other adjacent battery cells and further to another battery pack or the like.

Thus, in a lithium secondary battery industry, an effort to prevent such thermal propagation of a battery cell is continued, and various cooling schemes for the battery cell are researched for the effort. For example, in related arts, a scheme of disposing a heat sink for cooling a battery cell above or below a battery cell stack has been introduced.

However, since a contact area of the heat sink and the battery cell has been insufficient in a conventional upper or lower cooling scheme, cooling has not been effective, and accordingly, an improvement in performance of suppressing the thermal propagation of the battery cell and performance of rapidly recharging the lithium secondary battery has been limited.

In addition, in a case of a conventional battery cell stack, since the battery cell stack has a structure in which a plurality of battery cells are vertically stacked in a state of being stood, proposing an effective cooling structure in which a cooling plate for cooling one surface cools the multiple battery cells simultaneously has been difficult.

### Detailed Description of the Invention

### Technical Goals

An aspect provides a battery cell stack assembly for effectively performing cooling of a battery cell through a surficial cooling scheme and thereby improving performance of suppressing thermal propagation and performance of rapidly recharging a lithium secondary battery and a battery pack including the same.

Another aspect also provides a battery cell stack assembly for further effectively cooling a battery cell through a structure in which one cooling plate cools cooling multiple battery cells simultaneously and a battery pack including the same.

### Technical solutions

According to an aspect, there is provided a battery cell stack assembly including a cell stack in which a plurality of battery cells are vertically stacked so that leads are disposed on at least one of one side and another side in a horizontal first direction, and a cooling plate disposed between the plurality of battery cell, and the cell stack is provided in plurality and arranged in a horizontal second direction crossing the horizontal first direction, and the cooling plate is extended in the horizontal second direction so as to span the plurality of cell stacks arranged in the horizontal second direction.

Through this, performance of suppressing thermal propagation and performance of rapidly recharging a lithium secondary battery may be improved by effectively performing cooling of a battery cell.

In addition, further effectively cooling the battery cell may be allowed through a structure in which one cooling plate cools cooling multiple battery cells simultaneously.

The cooling plate may include an inlet into which a coolant flows and an outlet from which the coolant is discharged, the inlet may be formed on one side of the cooling plate in the second direction, and the outlet may be formed on the other side of the cooling plate in the second direction.

The plurality of cell stacks may be arranged to be spaced apart from each other so that a gap is formed between two adjacent cell stacks, and a venting gas generated from the battery cell may flow through the gap.

An open portion through which the venting gas is to pass in a vertical direction may formed to the cooling plate to correspond to a position at which the gap is formed.

The open portion may be formed in a shape recessed inward from an edge of each of one side and another side of the cooling plate in the horizontal first direction.

The open portion may be formed as an opening extended in the horizontal first direction.

The battery cell stack assembly may further include a base plate disposed at least one of above or below the cell stack, and a first venting hole through which the venting gas is to pass in a vertical direction may be formed to the base plate to correspond to a position at which the gap is formed.

The battery cell stack assembly may further include a side plate coupled to the base plate and configured to cover the cell stack in the horizontal first direction, and an upper plate coupled to the side plate and configured to cover the cell stack at a side opposite to the base plate.

A second venting hole through which the venting gas is to pass in the vertical direction may be disposed to the upper plate.

The cooling plate which is disposed at one level may be provided in plurality, each of the plurality of cooling plates may be extended in the horizontal second direction, and the plurality of cooling plates may be arranged in the horizontal first direction.

The cooling plate may be further provided below and above the cell stack, and two of the battery cells may be disposed between the two adjacent cooling plates.

The cooling plate may include an elastic material.

A coolant flow path in which a coolant flows and a gas pocket separated from the coolant flow path by a partition and formed on at least one side of the coolant flow path may be formed in the cooling plate.

According to another aspect, there is also provided A battery pack including a housing, and a battery cell stack assembly accommodated in the housing, and the battery cell stack assembly comprises a cell stack in which a plurality of battery cells are vertically stacked so that leads are disposed on at least one of one side and another side in a horizontal first direction and a cooling plate disposed between the plurality of battery cell, the cell stack is provided in plurality and arranged in a horizontal second direction crossing the horizontal first direction, and the cooling plate is extended in the horizontal second direction so as to span the plurality of cell stacks arranged in the horizontal second direction.

The battery pack may further include a base plate disposed at least one of above and below the battery cell stack assembly, and the plurality of cell stacks may be arranged to be spaced apart from each other so that a gap is formed between two adjacent cell stacks, and a hole through which a venting gas is to pass in a vertical direction may be formed to the base plate to correspond to a position at which the gap is formed.

A venting flow path may be formed between a surface of the housing, which is adjacent to the base plate, and the base plate.

The base plate may be disposed below the battery cell stack assembly and configured to support a load of the battery cell stack assembly.

The battery pack may further include a cell tray that supports the battery cell stack assembly, and the cell tray may include an opening portion disposed to face the venting hole of the base plate.

A venting flow path is formed between the cell tray and the housing to allow gas introduced through the opening to flow.

The battery cell stack assembly may be provided in plurality, and the plurality of battery cell stack assemblies may be arranged in the horizontal first direction.

The battery pack may further include a coolant inflow path provided on at least one of one side and another side of the battery cell stack assembly in the horizontal second direction, and a coolant discharge path provided on at least one of the one side and the other side of the battery cell stack assembly in the horizontal second direction.

### Effects of the Invention

Through a battery cell stack assembly according to the present disclosure, performance of suppressing thermal propagation and rapidly recharging a lithium secondary battery may be improved by effectively performing cooling of the battery cell.

Through a structure in which one cooling plate may cool multiple battery cells simultaneously, effective cooling of the battery cell may be allowed.

### Brief Description of Drawings

FIG. 1 is a perspective diagram illustrating an inside structure of a battery pack according to an example embodiment of the present disclosure.
FIG. 2 is a plan diagram illustrating an inside structure of a battery pack according to an example embodiment of the present disclosure.
FIG. 3 is an example exploded perspective diagram illustrating a battery cell stack assembly according to an example embodiment of the present disclosure.
FIG. 4 is an example exploded perspective diagram of a battery cell stack assembly according to an example embodiment of the present disclosure.
FIG. 5 illustrates that a portion of a battery cell stack assembly according to an example embodiment of the present disclosure is obliquely viewed from a front upper area.
FIG. 6 is a cross-sectional diagram of a portion of a battery cell stack assembly according to an example embodiment of the present disclosure.
FIG. 7 illustrates an example of a cooling plate of a battery cell stack assembly according to an example embodiment of the present disclosure.
FIG. 8 illustrates another example of a cooling plate of a battery cell stack assembly according to an example embodiment of the present disclosure.
FIGS. 9 through 12 illustrate a process of assembling a battery cell stack assembly according to an example embodiment of the present disclosure.

### Mode for Carrying Out the Invention

Before the present disclosure is described, terms or words used in the present disclosure and the accompanying claims are not to be limited to general definitions or dictionary definitions. The terms and words are to be construed under a principle that an inventor may appropriately define a concept of a term in order to describe their invention in the best way. Thus, since example embodiments described in the present disclosure and configurations illustrated in the accompanying drawings are merely most desirable example embodiments and do not represent all of the technical spirit of the present disclosure, it should be understood that various equivalents and modifications that may replace the example embodiments and configurations may be present at the time of filing the application of the present disclosure.

The same reference numerals or symbols illustrated in the accompanying drawings represent components or elements performing substantially identical functions. For convenience for description and understanding, example embodiments different from each other may be described with the same reference numerals or symbols. In other words, although a plurality of drawings illustrates elements having the same reference numeral, the plurality of drawings does not mean only one example embodiment.

In the following descriptions, terms in a singular form include terms in a plural form unless an apparently and contextually conflicting description is present. Terms such as "including" or "comprising" is to indicate that a feature, a number, an operation, an action, an element, a component, or a combination thereof is present. It should be understood that the terms are not to exclude in advance a possibility that one or more other features, numbers, operations, actions, elements, components, or combinations thereof may be present or added.

In addition, it should be noted in advance that an expression such as an upper side, an upper portion, a lower side, a lower portion, a side surface, a front surface, or a rear surface is based on directions illustrated in the drawings and that the expression may be changed when a direction of a corresponding object is changed.

Terms including an ordinal number such as "first" or "second" used in the present specification and claims may be used to distinguish elements. Such an ordinal number is used to contextually distinguish identical or similar elements from each other. Meanings of the terms may not be limited by use of the ordinal number. For example, a use order, a disposition order, or the like of elements with such an ordinal number may not be limitedly construed by the number. As required, ordinal numbers may be substituted with each other.

Hereinafter, the example embodiments of the present disclosure will be described with reference to the accompanying drawings. However, the idea of the present disclosure is not limited to the proposed example embodiments. For example, those skilled in the art who understand the idea of the present disclosure may propose another example embodiment included in the scope of the idea of the present disclosure through addition, change, removal, or the like of an element. However, the other example embodiment is also included in the scope of the idea of the present disclosure. Shapes, sizes, or the like of elements in the drawings may be exaggerated for clearer description.

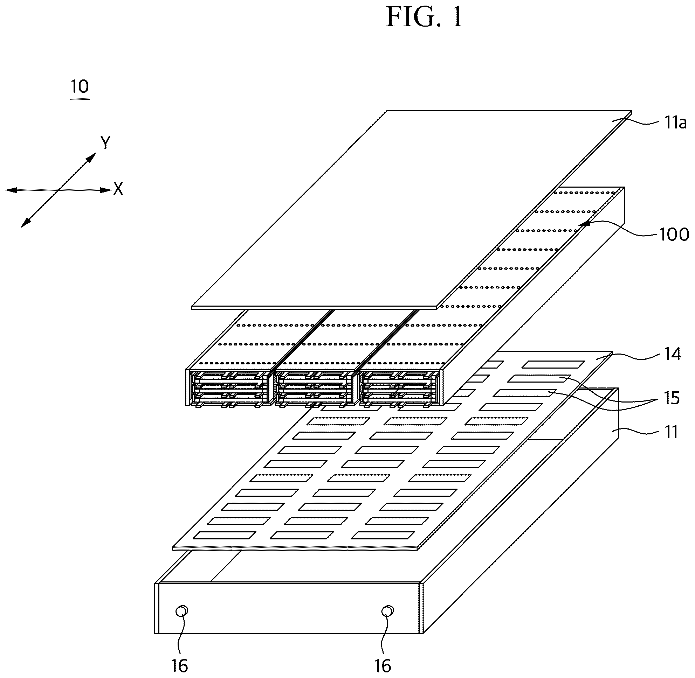

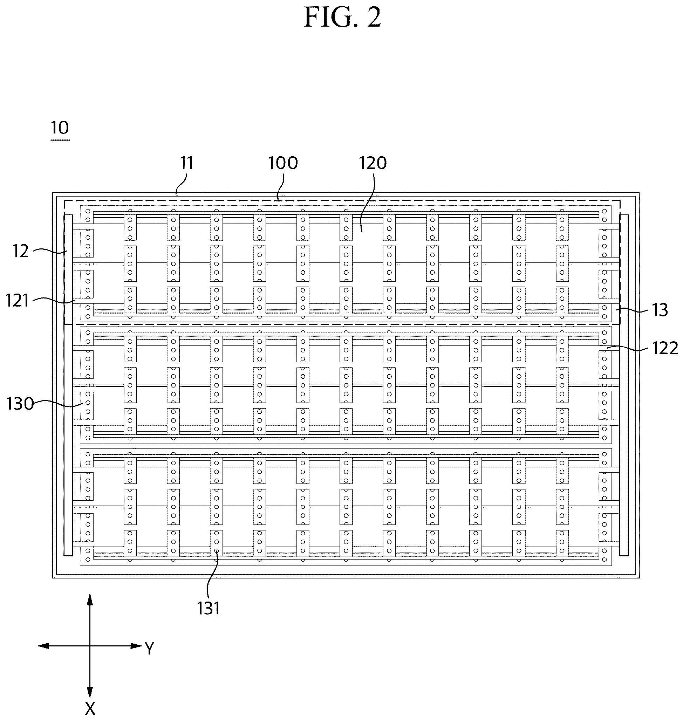

FIG. 1 is a perspective diagram illustrating an inside structure of a battery pack according to an example embodiment of the present disclosure. FIG. 2 is a plan diagram illustrating an inside structure of the battery pack according to an example embodiment of the present disclosure.

**In** the present disclosure, a horizontal second direction is defined as a direction crossing a horizontal first direction. For example, the horizontal second direction may be a direction perpendicularly crossing the horizontal first direction.

Hereinafter, with FIG. 2 as a reference, a case in which the horizontal first direction is an X-axis direction and the horizontal second direction is a Y-axis direction in a drawing will be described.

A battery pack 10 according to an example embodiments of the present disclosure may include a housing 11, a base plate 130, a battery cell stack assembly 100, a battery cell stack assembly 100, a coolant inflow path 12, and a coolant discharge path 13, but may be implemented without a portion thereof, and does not exclude an additional element. For example, referring to FIG. 1, the battery pack 10 may further include a cell tray 14 on which the base plate 130 is seated and supported.

Referring to FIGS. 1 and 2, the battery pack 10 may include the housing 11. The battery cell stack assembly 100, the coolant inflow path 12, and the coolant discharge path 13 may be received in the housing 11.

The battery pack 10 may include the base plate 130. The base plate 130 may be disposed horizontally in the housing 11. When the battery cell stack assembly 100 is provided in plurality, one base plate 130 may be provided over an entire position at which a plurality of battery cell stack assemblies 100 are seated, or base plates 130 of which the number corresponds to that of the battery cell stack assemblies 100 may be provided to be disposed at positions corresponding to respective positions of the battery cell stack assemblies 100.

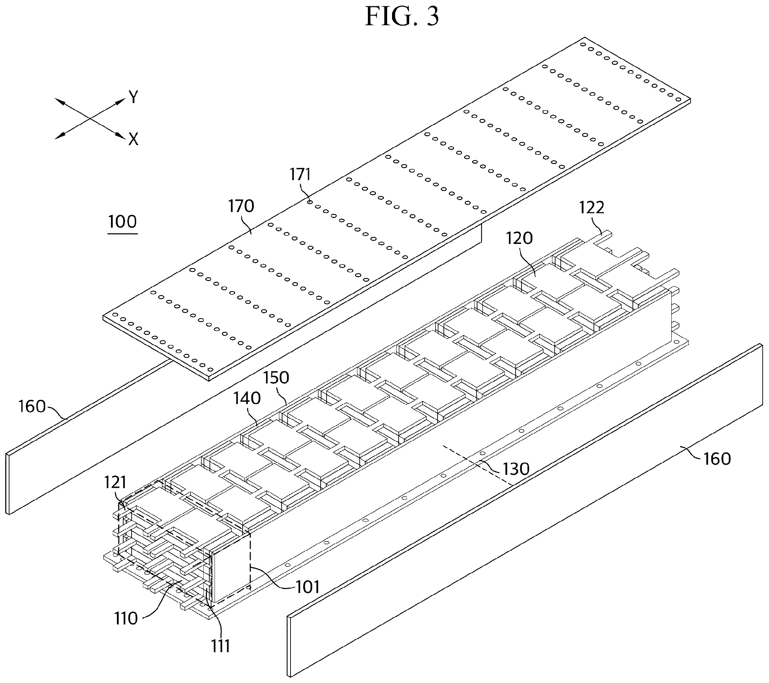

The base plate 130 may be disposed at least one of above and below a cell stack 101 (illustrated in FIG. 3) forming the battery cell stack assembly 100. For example, the base plate 130 may be disposed below the cell stack 101 (illustrated in FIG. 3). In this case, the base plate 130 may support the battery cell stack 101 (illustrated in FIG. 3) in a gravitational direction. In other words, the base plate 130 may support a load of the battery cell stack 101 (illustrated in FIG. 3).

A first venting hole 131 through which a venting gas may pass may be formed to the base plate 130. A detailed position and structure of the first venting hole 131 will be described below in detail with reference to FIGS. 2 through 6.

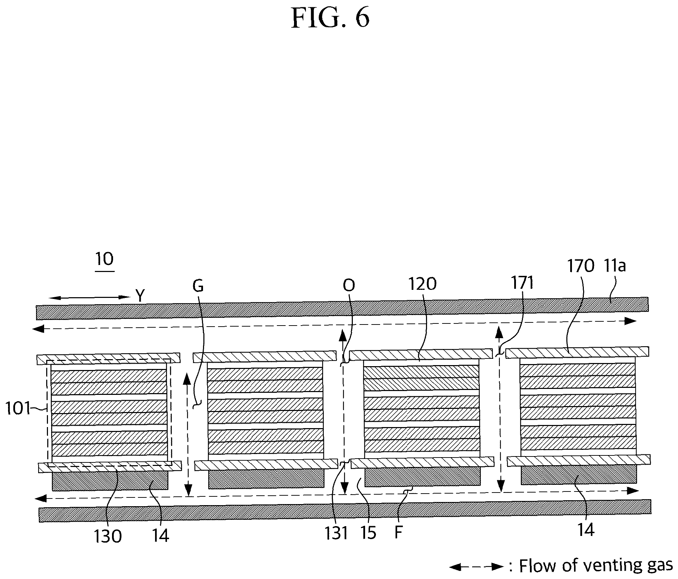

A venting flow path F (illustrated in FIG. 6) may be formed between the base plate 130 and one surface of the housing 11 adjacent thereto. A gas or particle generated by venting in a battery cell 110 (illustrated in FIG. 3) forming the cell stack 101 (illustrated in FIG. 3) may pass through the first venting hole 131 of the base plate 130 and then may be discharged to an outside of the battery pack 10 through a venting member 16 provided to the housing 11 of the battery pack 10 while flowing along the venting flow path F (illustrated in FIG. 6).

In various example embodiments, the battery pack 10 may further include the cell tray 14 on which the battery cell stack assembly 100 is seated and supported. For example, referring to FIG. 1, the plurality of battery cell stack assemblies 100 may be received in the housing 11 in a state of being seated on the cell tray 14.

The cell tray 14 may be formed of a material having sufficient rigidity for stably supporting the plurality of battery cell stack assemblies 100, for example, a metal or a resin material.

In example embodiments, the cell tray 14 may include a plurality of opening portions 15 through which a gas or flame discharged from the battery cell stack assembly 100 may pass. For example, in the cell tray 14, the plurality of opening portions 15 may be disposed to face the first venting hole 131 of the base plate 130, the gas or flame generated in the battery cell stack assembly 100 may flow out in a lower direction through an opening portion 15 of the cell tray 14 through the first venting hole 131 of the base plate 130.

In example embodiments, the venting flow path F, which is a space in which a gas or flame may flow, may be formed between the cell tray 14 and the housing 11. Alternatively, the venting flow path F may be formed in the cell tray 14.

However, in example embodiments, the plurality of battery cell stack assemblies 100 may be directly seated and received on a housing without an additional cell tray 14. In this case, the venting flow path F may be formed between the base plate 130 and the housing.

The battery pack 10 may include one or more battery cell stack assemblies 100. The battery cell stack assembly 100 may be received in the housing 11. In the battery pack 10 according to an example embodiment of the present disclosure, the battery cell stack assembly 100 may be disposed above the base plate 130 to be supported in the gravitation direction. The base plate 130 may be also understood as one element of the battery cell stack assembly 100.

The battery cell stack assembly 100 may be extended in a horizontal second direction y. The battery cell stack assembly 100 may be provided in plurality. In this case, the plurality of battery cell stack assemblies 100 which is individually extended in the horizontal second direction y may be arranged in a horizontal first direction x. However, the battery pack 10 is not limited thereto and may be formed with one battery cell stack assembly 100. Each of the battery cell stack assemblies 100 may be referred to as a battery module, but a battery cell may not be necessarily construed as a form of a battery module in a form received in a battery module case.

A detailed structure of the battery cell stack assembly 100 will be described below in detail with reference to FIGS. 2 through 6.

The battery pack 10 may include the coolant inflow path 12. The battery inflow path 12 may be provided on at least one of one side and another side of the battery cell stack assembly 100 in the horizontal second direction y. For example, when an inlet 121 formed to a cooling plate 120 of the battery cell stack assembly 100 is formed on one side of the cooling plate 120 in the horizontal second direction y, the coolant inflow path 12 may be disposed on the one side of the battery cell stack assembly 1000 in the horizontal second direction y to correspond thereto.

The battery pack 10 may include the coolant discharge path 13. The battery discharge path 13 may be provided on at least one of the one side or the other side of the battery cell stack assembly 100 in the horizontal second direction y. For example, when an outlet 122 formed to the cooling plate 120 of the battery cell stack assembly 100 is formed on another side of the cooling plate 120 in the horizontal second direction y, the coolant discharge path 13 may be disposed on the other side of the battery cell stack assembly 1000 in the horizontal second direction y to correspond thereto.

In various example embodiments, the battery pack 10 may further include an upper cover 11a coupled to an open side of the housing 11 to cover an upper surface of the battery cell stack assembly 100. For example, referring to FIG. 1, the housing 11 receiving the battery cell stack assembly 100 may have a box-type structure opened upward, and the upper cover 11a may be coupled to an upper side of the housing 11 to close an inside space of the housing.

In example embodiments, a venting flow path in which a gas discharged upward from the battery cell stack assembly 100 may flow may be formed between the upper cover 11a and the battery cell stack assembly 100.

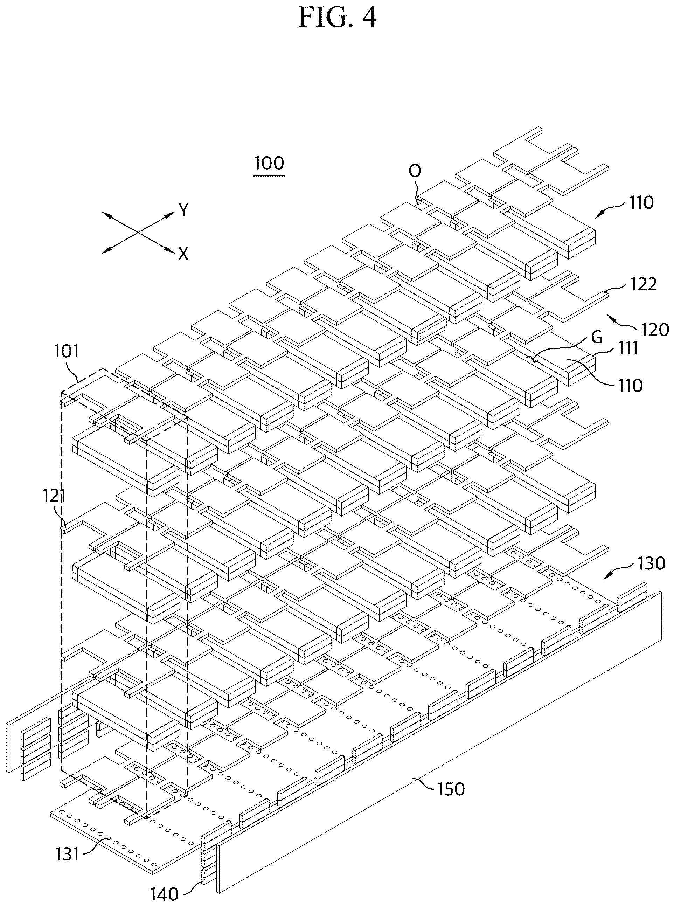

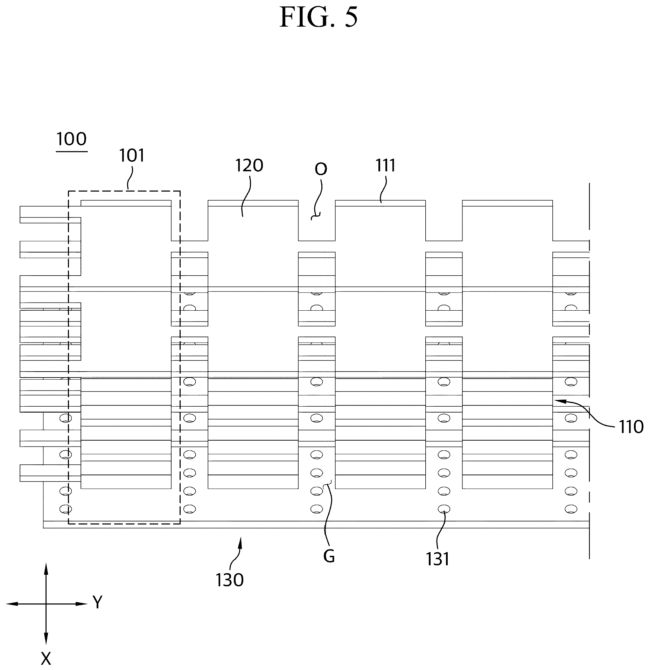

FIG. 3 is an example exploded perspective diagram illustrating a battery cell stack assembly according to an example embodiment of the present disclosure. FIG. 4 is an example exploded perspective diagram of the battery cell stack assembly according to an example embodiment of the present disclosure. In the exploded perspective diagram of FIG. 4, a side plate and an upper plate may be omitted. FIG. 5 illustrates that the battery cell stack assembly according to an example embodiment of the present disclosure is obliquely viewed from a front upper area. FIG. 6 is a cross-sectional diagram of a portion of the battery cell stack assembly according to an example embodiment of the present disclosure.

Hereinafter, the battery cell stack assembly 100 according to an example embodiments of the present disclosure may include the base plate 130, the cell stack 101, and the cooling plate 120, but may be implemented without a portion thereof, and does not exclude an additional element. For example, the battery pack 10 may further include the cell tray 14 on which the base plate 130 is seated and supported.

Hereinafter, with FIG. 3 as a reference, a horizontal direction crossing a direction in which the cell stack 101 is arranged may be referred to as the horizontal first direction x, and the direction in which the cell stack is arranged may be referred to as the horizontal second direction y.

Referring to FIGS. 3 through 6, the battery cell stack assembly 100 may include the cell stack 101. The cell stack 101 may be provided in plurality. A plurality of cell stacks 101 may be arranged in the horizontal second direction y to form the battery cell stack assembly 100. The plurality of cell stacks 101 may be understood as being arranged in the horizontal second direction y crossing the horizontal first direction x which is a direction in which a lead of the battery cell 110 faces. The number of the plurality of cell stacks 101 which are arranged may vary depending on a length of a housing in the horizontal second direction y.

The cell stack 101 may include a plurality of battery cells 110. For example, the battery cell 110 may be a planar battery cell having a planar shape, and the cell stack 101 may be formed by vertically stacking a plurality of horizontally laid planar battery cells 110. However, a detailed shape of the battery cell 110 is not limited to the above description, and the cell stack 101 may be formed by stacking a battery cell having various shapes other than a planar battery cell.

The number of the battery cells 110 which are stacked may be specified to correspond to a height of the housing 11 (illustrated in FIGS. 1 and 2). Through such a structure, since the battery cell stack assembly 100 may be manufactured by sequentially stacking the battery cells 110 to correspond to a gravitational direction, the battery cell stack assembly 100 may be easily manufactured.

The plurality of battery cells 110 may include a lead 111. The lead 111 may be a portion serving as an electrode. The lead 111 may be provided on at least one of one side or another side of each of the plurality of battery cells 110 in the horizontal first direction x. For example, the lead 111 which forms a positive electrode may be disposed on one side of the battery cell 110 in the horizontal first direction x, and the lead 111 which forms a negative electrode may be disposed on another side of the battery cell 110 in the horizontal first direction x. In contrast, both of the lead 111 forming the positive electrode and the lead 111 forming the negative electrode may be disposed on the one side or the other side of the battery cell 110 in the horizontal first direction x.

Referring to FIGS. 4 through 6, the plurality of cell stacks 101 may be arranged to be spaced apart from each other. A gap G may be formed between two adjacent cell stacks 101 among the plurality of cell stacks 101. A venting gas generated from the battery cell 110 may flow through the gap G. That is, the gap G formed between the plurality of cell stacks 101 may guide a flow path of the venting gas which is generated by venting in the battery cell 110.

Specifically, referring to FIG. 6, the venting gas which is discharged from the battery cell 110 may have a high possibility of being generated at an edge on one side or another side of the battery cell 110 in the horizontal second direction y. At this point, the plurality of cell stacks 101 may be spaced apart from each other, and through this, the edge on the one side or the other side of the battery cell 110 in the horizontal second direction y may be exposed to the gap G between the plurality of cell stacks 101. Thus, the venting gas may be emitted through the gap G, and the emitted venting gas may flow into the venting flow path F by passing the gap G and passing through the first venting hole 131 provided to the base plate 130.

The battery cell stack assembly 100 may include the cooling plate 120. The cooling plate 120 may be disposed at least between the plurality of battery cells 110. For example, two layers of the battery cells 110 may be provided between two layers of cooling plates 120 so that the cooling plate 120 may face at least one surface of the battery cell 110. Through this, while cooling performance is guaranteed, energy density may be increased when compared to a structure in which one layer of the cooling plate 120 and one layer of the battery cell 110 are alternately stacked. Also, the cooling plate 120 may be disposed above and below the cell stack 101. Through such a structure, since all the battery cells 110 may be in contact with cooling plates 120, cooling of the battery cell 110 may be effectively performed.

The cooling plate 120 may be extended in the horizontal second direction y. The cooling plate 120 may be provided over the plurality of cell stacks 101 arranged in the horizontal second direction y. For example, the cooling plate 110 which is disposed between a second battery cell 110 and a third battery cell 110 below one cell stack 101 may be extended to another adjacent cell stack 101 to be disposed also between a second battery cell 110 and a third battery cell 110 below the other adjacent cell stack 101. The plurality of cell stacks 101 may be understood as sharing the cooling plate 120 with each other. Through this, since a structure in which the cooling plate 120 is in contact with all the battery cells 110 while the number of cooling plates 120 is reduced may be implemented, as a coolant flow path is simplified, a manufacturing process may be simplified while cooling efficiency is improved.

The cooling plate 120 which is disposed at one level of the cell stacks 101 may be provided in plurality. For example, in one battery cell stack assembly 100, two cooling plates 120 disposed at one level of the cell stacks 101 may be provided, and the two cooling plates 120 may be arranged in the horizontal first direction x. If the cooling plate 120 which is disposed at one level of the cell stacks 101 is formed as a single plate, the coolant flow path which is formed in the cooling plate 120 may be elongated, and accordingly, the cooling efficiency may be decreased in a direction toward the outlet 122. When the cooling plate 120 which is disposed at one level of the cell stacks 101 is provided in plurality so that a width of the cooling plate 120 in the horizontal first direction x is decreased, since the coolant flow path inside the cooling plate 120 is simplified, a coolant flowing in from the inlet 121 may move faster to the outlet 122. Through this, a cooling effect for the battery cell 110 may be improved.

However, the cooling plate 120 is not limited thereto, and when a sufficient cooling effect is present even if one cooling plate 120 is disposed at one level of the cell stacks 101, only one cooling plate 120 may be provided at one level of the cell stacks 101. Also, even a case in which three or more cooling plates 120 are provided at one level of the cell stacks 101 is not excluded.

The cooling plate 120 may include the inlet 121 and the outlet 122. The coolant may flow into an inside of the cooling plate 120 through the inlet 121. The coolant may be discharged from the cooling plate 120 through the outlet 122.

Each of the inlet 121 and the outlet 122 may be formed on at least one of one side and another side of the cooling plate 120 in the horizontal second direction y. In other words, the inlet 121 and the outlet 122 may be understood as being formed in a direction crossing a direction in which the lead 111 of the battery cell 110 is formed. Through this, since the inlet 121 and the outlet 122 may not interfere with the lead 111 protruding from the battery cell 110 in the horizontal fist direction x and a busbar 140 connected thereto, a structure of the battery cell stack assembly 100 may be simplified.

For example, the inlet 121 may be formed on the one side of the cooling plate 120 in the horizontal second direction y and the outlet 122 may be formed on the other side in the horizontal second direction y so that cooling is effectively performed by allowing the coolant to rapidly flow from one side to another side of the cooling plate 120 in the horizontal first direction x. However, the inlet 121 and the outlet 122 are not limited thereto, and both thereof may be provided on the one side or the other side of the cooling plate 120 in the horizontal second direction y. In addition, each of the inlet 121 and the outlet 122 may be provided in plurality to one cooling plate 120.

The cooling plate 120 may control swelling of the battery cell 110. To this end, the cooling plate 120 may include an elastic material. Through this, the cooling plate 120 may press at least a portion of the battery cell 110 in order not to damage the battery cell 110 when the swelling of the battery cell 110 occurs, so that damage to the cooling plate 120 due to the swelling may be prevented. The elastic material is not particularly limited, but a material known to be elastic in a related field, such as silicon resin and urethane resin, may be appropriately used.

A gas pocket (not illustrated) as well as the coolant flow path in which the coolant may flow may be formed in the cooling plate 120. The gas pocket may be tightly sealed so as not to communicate with an outside of the cooling plate 120. The gas pocket may be formed on both sides of at least a portion of the coolant flow path or may be formed only on one side of the at least a portion of the coolant flow path. The gas pocket may be divided from the coolant flow path by a partition. Through this, while the cooling plate cools the battery cell, as elasticity of the cooling plate 120 is improved by the gas pocket, the battery cell 110 may be prevented from swelling.

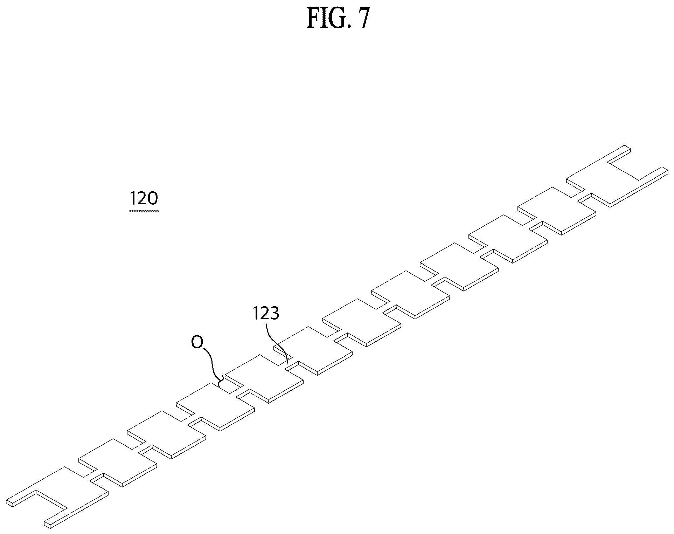

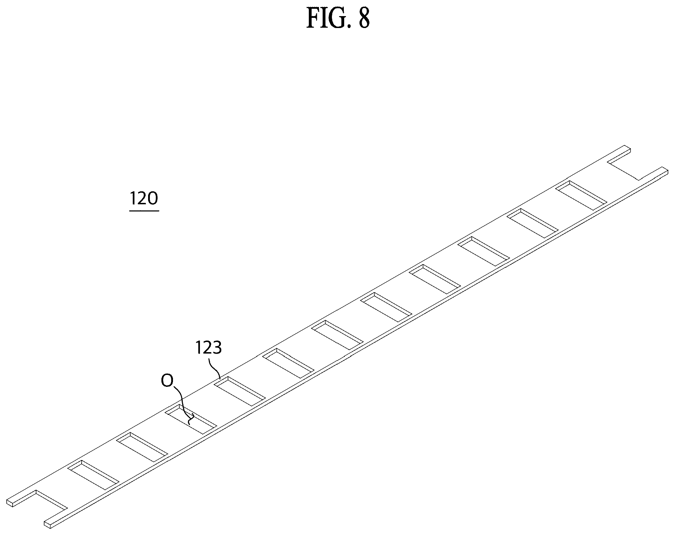

Referring to FIGS. 4 through 6, an open portion O may be formed to the cooling plate 120. The open portion O may be formed at a position corresponding to a position at which the gap G between the two adjacent cell stacks 101 is formed. The venting gas emitted by the venting in the battery cell 110 may pass through the cooling plate 120 in a vertical direction (e.g., a direction perpendicular to both of an x-axis and a y-axis) through the open portion O. A detailed structure of the cooling plate 120 will be described below in detail with reference to FIGS. 7 and 8.

The battery cell stack assembly 100 may include the base plate 130. The base plate 130 may be disposed above or below the cell stack 101. For example, the base plate 130 may be disposed below the cell stack 101.

The first venting hole 131 may be formed to the base plate 130. The first venting hole 131 may be formed at a position corresponding to a position at which the gap between the two adjacent cell stacks 101 is formed. The venting gas may pass through the base plate 130 in the vertical direction through the first venting hole 131.

The first venting hole 131 may be formed in plurality, and a plurality of first venting holes 131 may be arranged in the horizontal first direction x and drilled at a position corresponding to the gap G formed between the plurality of cell stacks 101. Since the base plate 130 is to support weights of the cell stack 101 and the cooling plate 120, when a small number of first venting holes 131 are formed to large, the cell stack 101 may collapse as rigidity of the base plate 130 is weakened. Thus, forming multiple relatively small-sized first venting holes 131 may be desired.

However, the first venting hole 131 is not limited thereto, and when the base plate 130 is formed of a high-strength material, one venting hole 131 may be formed in a shape elongated in the horizontal second direction y to correspond to each gap G.

Referring to FIGS. 3 through 4, the battery cell stack assembly 100 may include the busbar 140. The busbar 140 may be provided on at least one of one side and another side of the cell stacks 101 in the horizontal first direction x. The busbar 140 may be electrically connected to the lead 111 of the battery cell 110. For example, when the lead 111 is formed on each of one side and another side of the battery cell 110 in the horizontal first direction x, the busbar 140 may be provided on each of one side and another side in the horizontal first direction x to correspond to a formation position of the lead 111 of the battery cell 110. However, the busbar 140 is not limited thereto, and when the lead 111 is formed only on the one side or the other side of the battery cell 110, the busbar 140 may be provided only on the one side or the other side of the battery cell 110 to correspond to the formation position of the lead 111 of the battery cell 110.

The battery cell stack assembly 100 may include a busbar fixation member 150. The busbar fixation member 150 may be provided on a side of the busbar 140, which is opposite to the cell stack 101. The busbar fixation member 150 may guide a position of the busbar 150 in order to fix a position of the cell stack 101 which is connected to the busbar 140.

The coolant flow path (not illustrated) may be formed in the busbar fixation member 150. Also, the busbar fixation member 150 may be provided to be in contact with the busbar 140. The busbar fixation member 150 may cool the busbar 140.

In various example embodiments, the battery cell stack assembly 100 may include a side plate 160 coupled to the base plate 130 to cover the cell stack 101 in the horizontal first direction (e.g., an x-axis direction) and an upper plate 170 coupled to the side plate 160 to cover the cell stack 101 on a side opposite to the base plate 130.

For example, referring to FIG. 3, the side plate 160 may be provided as a pair and coupled to edges of both sides of the base plate 130. A pair of side plates 160 may be formed of a material having sufficient rigidity so as to protect the cell stack 101 which is disposed in between.

The upper plate 170 may be coupled to an upper side of the side plate 160. The upper plate may cover an upper side surface of the cell stack 101. As required, the cooling plate 120 may be disposed to an uppermost end of the cell stack 101, and in this case, the upper plate 170 may be disposed to face the cooling plate 120.

Various coupling schemes such as a mechanical coupling scheme through an additional coupling member (not illustrated) or a bonding scheme through an adhesive member (not illustrated) may be applied to coupling between the base plate 130, the side plate 160, and the upper plate 170.

In example embodiments, one or more second venting holes 171 through which the venting gas may pass may be formed to the upper plate 170. For example, referring to FIGS. 3 and 6 together, a plurality of venting holes 171 disposed to face the open portion O of the cooling plate 120 in the vertical direction (e.g., the direction perpendicular to both of the x-axis and the y-axis) may be disposed to the upper plate 170. The venting gas emitted by the venting in the battery cell 110 may move upward through the open portion O and may be discharged toward an upper side of the battery cell stack assembly 100 through a second venting hole 171 disposed to face the open portion O.

Referring to FIG. 6, a venting flow path in which a gas may flow may be formed between the upper plate 170 and the upper cover 11a. Alternatively, unlike an illustration in a drawing, example embodiments may be configured so that an additional space may not be formed between the upper plate 170 and the upper cover 11a and so that a gas passing through the upper plate 170 may directly pass through the upper cover 11a to be discharged to an outside of the battery pack 10.

The second venting holes 171 of the upper plate 170 may be arranged in the horizontal first direction x and drilled at a position corresponding to the gap G formed between the plurality of cell stacks 101.

Meanwhile, in various example embodiments, at least one of the side plate 160 and the upper plate 170 may be omitted in the battery cell stack assembly 100. For example, the battery cell stack assembly 100 may be implemented in a form in which the plurality of battery cells 110 and the cooling plate 120 are stacked and fixed to an upper side of the base plate 130 disposed in the housing 11 without the side plate 160 and the upper plate 170.

FIG. 7 illustrates an example of a cooling plate of a battery cell stack assembly according to an example embodiment of the present disclosure. FIG. 8 illustrates another example of the cooling plate of the battery cell stack assembly according to an example embodiment of the present disclosure.

Referring to FIG. 7, the open portion O may be formed to the cooling plate 120. A venting gas emitted from the battery cell 110 may flow in a vertical direction (e.g., a direction perpendicular to both of an x-axis and a y-axis in FIGS. 1 through 6) through the gap G formed between the plurality of cell stacks 101. At this point, the gap G between the plurality of cell stacks 101 may communicate in the vertical direction through the open portion O of the cooling plate 120.

The open portion O may be formed in various shapes to the cooling plate 120. For example, referring to FIG. 7, the open portion O may be formed, at a portion of the cooling plate 120 corresponding to a position of the gap G formed between the plurality of cell stacks 101, in a shape recessed inward from an edge of each of one side and another side of the cooling plate 120. At this point, a portion of the cooling plate 120, which is disposed to one cell stack 101, and a portion of the cooling plate 120, which is disposed to a cell stack 101 adjacent to the one cell stack 101, may be connected to each other by a connection part 123. Coolant flow paths individually formed to the above-described two portions may communicate with each other by a coolant flow path provided in the connection part 123. The connection part 123 may be provided to have a width at least for forming the coolant flow path therein.

**In** contrast, referring to FIG. 8, the open portion O may be formed, at the portion of the cooling plate 120 corresponding to the position of the gap G formed between the plurality of cell stacks 101, in a shape of an opening elongated from a central area of the cooling plate 120 in a horizontal first direction. Here, "elongated" may mean that a width of the opening in the horizontal first direction is wider than a width of the opening in a horizontal second direction. In addition, unlike illustrations in FIGS. 7 and 8, the open portion O may be formed, at the portion of the cooling plate 120 corresponding to the position of the gap G formed between the plurality of cell stacks 101, as a plurality of openings penetrating the cooling plate 120 in the vertical direction.

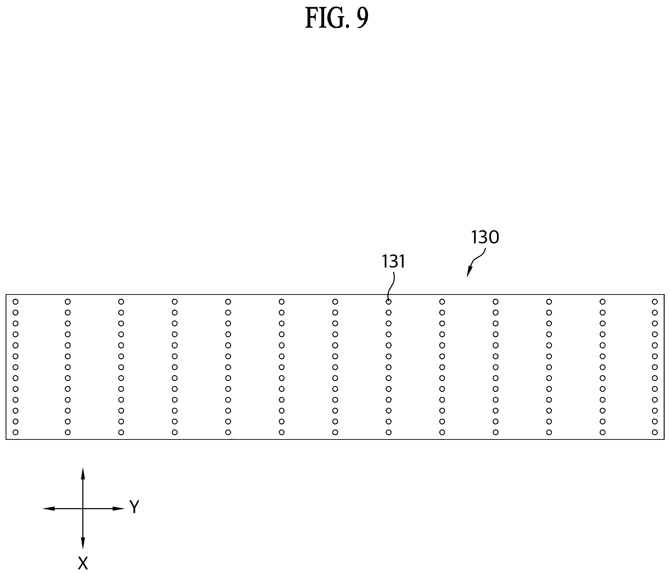

FIGS. 9 through 12 illustrate a process of assembling a battery cell stack assembly according to an example embodiment of the present disclosure.

Hereinafter, a case in which the base plate 130 is disposed below the cell stack 101 will be described as an example.

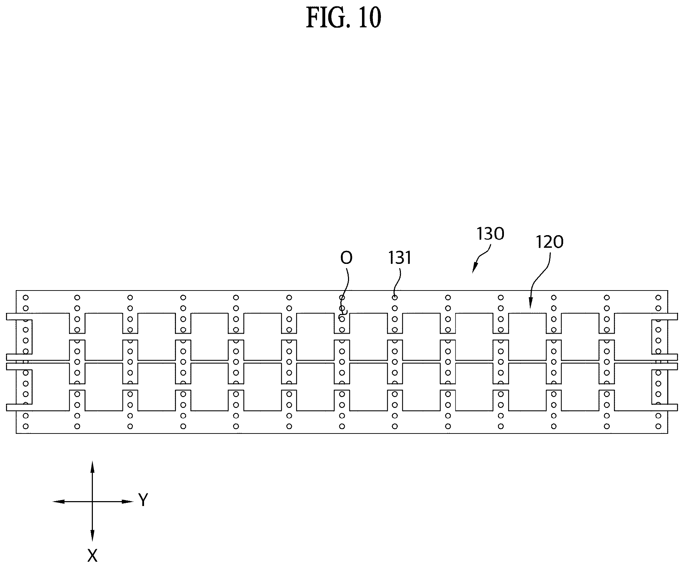

Referring to FIGS. 9 and 10, a cooling plate 120 of a first level, which is extended in the horizontal second direction y, may be disposed on the base plate 130. At this point, the cooling plate 120 may be disposed so that the open portion O of the cooling plate 120 and the first venting hole 131 of the base plate 130 overlap each other in a vertical direction.

Cooling plates 120 may be arranged in two rows. However, as described above, the number of cooling plates 120 at one level may not be limited to two.

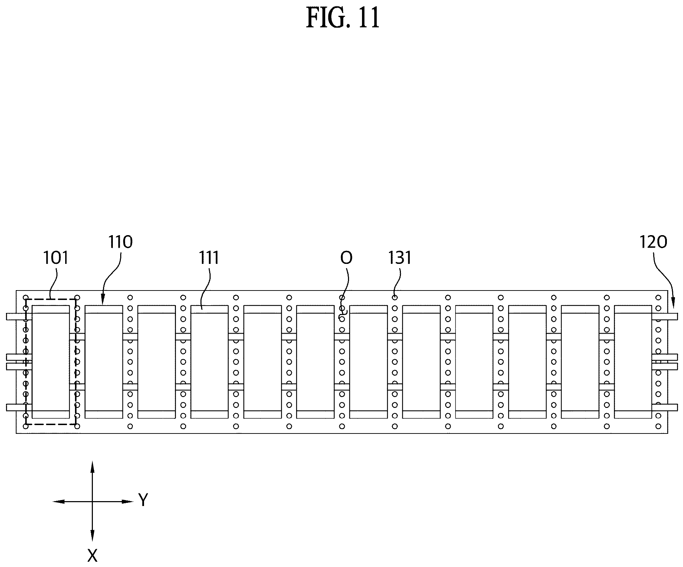

Referring to FIG. 11, the battery cell 110 may be stacked on the cooling plate 120. When viewed from above the battery cell 110, the lead 11 of the battery cell 110 may be disposed to protrude from the cooling plate 120 toward each of one side and another side in the horizontal first direction x. Through this, the busbar 140 to be coupled to the lead 111 and the cooling plate 120 may not interfere with each other.

The battery cell 110 may be stacked at a position corresponding to a position at which each of the plurality of cell stacks 101 may be formed. That is, the battery cell 110 may be stacked at a position not overlapping, in the vertical direction, the first venting hole 131 formed to the base plate 130 and the open portion O formed to the cooling plate 120.

Two battery cells 110 may be stacked at each position corresponding to the position at which each of the plurality of cell stacks 101 may be formed. A battery cell 110 thereof disposed below may be in contact with the cooling plate 120 which is disposed thereunder and may be cooled, and a battery cell 110 disposed above may be in contact with a cooling plate 120 to be disposed thereon and may be cooled.

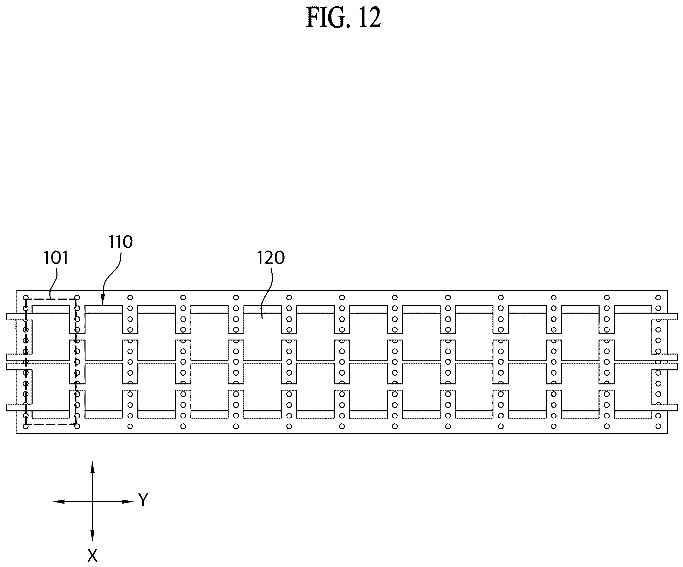

Referring to FIG. 12, a cooling plate 120 of a second level may be stacked on the battery cell 110. A shape and position of the cooling plate 120 of the second level may correspond to the cooling plate 120 of the first level.

Then, a process illustrated in FIGS. 11 and 12 may be repeated a plurality of times. For example, the process illustrated in FIGS. 11 and 12 may be repeated two more times. As a result, the cell stack 101 may be configured so that two battery cells 110 are disposed between two adjacent cooling plates 120 by stacking, from below, the cooling plate 120 of the first level, the two battery cells 110, the cooling plate 120 of the second level, two battery cells 110, a cooling plate 120 of a third level, two battery cells 110, and lastly a cooling plate 120 of a fourth level in sequential order.

However, a number of cooling plates 120 and battery cells 110 stacked in each cell stack 101 may vary depending on required power and/or a specification of the battery pack housing 11 (illustrated in FIGS. 1 and 2).

The example embodiments or other example embodiments of the present disclosure described above are not mutually exclusive or distinguished from each other. Each element or function in the example embodiments or other example embodiments of the present disclosure described above may be used in combination with or combined to another.

For example, the element A described in an example embodiment and/or a drawing and/or the element B described in another example embodiment and/or another drawing may be combined. In other words, although combination between elements has not been directly described, the combination may be possible unless the combination is described as being impossible.

The above-described details are not to be limitedly construed in all aspects and are to be considered as an example. The scope of the present disclosure is to be determined by a reasonable interpretation of the accompanying claims, and all modifications within a range equivalent to the present disclosure belong to the scope of the present disclosure.

### [Description of Reference Numerals]

10: Battery pack
11: Housing
12: Coolant inflow path
13: Coolant discharge path
100: Battery cell stack assembly
101: Cell stack
110: Battery cell
111: Lead
120: Cooling plate
121: Inlet
122: Outlet
123: Connection part
130: Base plate
131: Hole
140: Busbar
150: Busbar fixation member
G: Gap
O: Open portion
F: Venting flow path

## Claims

1. A battery cell stack assembly comprising:
a cell stack in which a plurality of battery cells are vertically stacked so that leads are disposed on at least one of one side and another side in a horizontal first direction; and
a cooling plate disposed between the plurality of battery cell,
wherein the cell stack is provided in plurality and arranged in a horizontal second direction crossing the horizontal first direction, and
the cooling plate is extended in the horizontal second direction so as to span the plurality of cell stacks arranged in the horizontal second direction.

2. The battery cell stack assembly of claim 1, wherein the cooling plate comprises:
an inlet into which a coolant flows; and
an outlet from which the coolant is discharged,
the inlet is formed on one side of the cooling plate in the second direction, and
the outlet is formed on the other side of the cooling plate in the second direction.

3. The battery cell stack assembly of claim 1, wherein the plurality of cell stacks are arranged to be spaced apart from each other so that a gap is formed between two adjacent cell stacks, and
a venting gas generated from the battery cell flows through the gap.

4. The battery cell stack assembly of claim 3, wherein an open portion through which the venting gas is to pass in a vertical direction is formed to the cooling plate to correspond to a position at which the gap is formed.

5. The battery cell stack assembly of claim 4, wherein the open portion is formed in a shape recessed inward from an edge of each of one side and another side of the cooling plate in the horizontal first direction.

6. The battery cell stack assembly of claim 4, wherein the open portion is formed as an opening extended in the horizontal first direction.

7. The battery cell stack assembly of claim 3, further comprising a base plate
disposed at least one of above or below the cell stack,
wherein a first venting hole through which the venting gas is to pass in a vertical direction is formed to the base plate to correspond to a position at which the gap is formed.

8. The battery cell stack assembly of claim 7, further comprising:
a side plate coupled to the base plate and configured to cover the cell stack in the horizontal first direction; and
an upper plate coupled to the side plate and configured to cover the cell stack at a side opposite to the base plate.

9. The battery cell stack assembly of claim 8, wherein a second venting hole through which the venting gas is to pass in the vertical direction is disposed to the upper plate.

10. The battery cell stack assembly of claim 1, wherein the cooling plate which is disposed at one level is provided in plurality,
each of the plurality of cooling plates is extended in the horizontal second direction, and
the plurality of cooling plates are arranged in the horizontal first direction.

11. The battery cell stack assembly of claim 1, wherein the cooling plate is further provided below and above the cell stack, and
two of the battery cells are disposed between the two adjacent cooling plates.

12. The battery cell stack assembly of claim 1, wherein the cooling plate comprises an elastic material.

13. The battery cell stack assembly of claim 1, wherein a coolant flow path in which a coolant flows and a gas pocket separated from the coolant flow path by a partition and formed on at least one side of the coolant flow path are formed in the cooling plate.

14. A battery pack comprising:
a housing; and
a battery cell stack assembly accommodated in the housing,
wherein the battery cell stack assembly comprises a cell stack in which a plurality of battery cells are vertically stacked so that leads are disposed on at least one of one side and another side in a horizontal first direction and a cooling plate disposed between the plurality of battery cell,
the cell stack is provided in plurality and arranged in a horizontal second direction crossing the horizontal first direction, and
the cooling plate is extended in the horizontal second direction so as to span the plurality of cell stacks arranged in the horizontal second direction.

15. The battery pack of claim 14, further comprising a base plate disposed at least one of above and below the battery cell stack assembly,
wherein the plurality of cell stacks are arranged to be spaced apart from each other so that a gap is formed between two adjacent cell stacks, and
a venting hole through which a venting gas is to pass in a vertical direction is formed to the base plate to correspond to a position at which the gap is formed.

16. The battery pack of claim 15, wherein a venting flow path is formed between a surface of the housing, which is adjacent to the base plate, and the base plate.

17. The battery pack of claim 15, further comprising a cell tray that supports the battery cell stack assembly,
wherein the cell tray comprises an opening portion disposed to face the venting hole of the base plate.

18. The battery pack of claim 17, wherein a venting flow path is formed between the cell tray and the housing to allow gas introduced through the opening to flow.

19. The battery pack of claim 14, wherein the battery cell stack assembly is provided in plurality, and
the plurality of battery cell stack assemblies are arranged in the horizontal first direction.

20. The battery pack of claim 14, further comprising:
a coolant inflow path provided on at least one of one side and another side of the battery cell stack assembly in the horizontal second direction; and
a coolant discharge path provided on at least one of the one side and the other side of the battery cell stack assembly in the horizontal second direction.
